# EUROPÄISCHE PATENTSCHRIFT

(11) **EP 2 619 935 B1**
(45) Veröffentlichungstag und Bekanntmachung des Hinweises auf die Patenterteilung: **03.04.2019**
(21) Anmeldenummer: 11764705.7
(22) Anmeldetag: 22.09.2011
(51) Int. Cl.: H04J 3/06, H04L 12/413

(54) **VORRICHTUNG UND VERFAHREN ZUR BEREITSTELLUNG EINER GLOBALEN ZEITINFORMATION IN EREIGNISGESTEUERTER BUSKOMMUNIKATION**
DEVICE AND METHOD FOR PROVIDING A GLOBAL TIME INFOMRATION IN AN EVENT CONTROLLED BUS COMMUNICATION
DISPOSITIF ET PROCÉDÉ DE FOURNIR UNE INFORMATION DU TEMPS GLOBAL DANS UN SYSTÈME DE COMMUNICATION DE BUS

(30) Priorität: 24.09.2010 DE 102010041363
(43) Veröffentlichungstag der Anmeldung: 31.07.2013
(73) Patentinhaber: Robert Bosch GmbH, 70442 Stuttgart (DE)
(72) Erfinder: HARTWICH, Florian, 72762 Reutlingen (DE); HORST, Christian, 72144 Dusslingen (DE)
(86) Internationale Anmeldenummer: PCT/EP2011/066474
(87) Internationale Veröffentlichungsnummer: WO 2012/038493

(56) Entgegenhaltungen:
- EP-A1- 0 940 954
- EP-A2- 1 115 220
- WO-A1-98/54872
- WO-A1-2009/053332
- WO-A2-03/025686
- WO-A2-03/085921
- JOACHIM HILLEBRAND ET AL: "Coexistence of Time-Triggered and Event-Triggered Traffic in Switched Full-Duplex Ethernet Networks", INDUSTRIAL EMBEDDED SYSTEMS, 2007. SIES '07. INTERNATIONAL SYMPOS IUM ON, IEEE, PI, 1. Juli 2007 (2007-07-01), Seiten 217-224, XP031131521, ISBN: 978-1-4244-0839-9
- "Road vehicles - Controller area network (CAN)- Part 4: Time-triggered communication ; ISO+11898-4-2004 ; First edition", IEEE DRAFT; ISO+11898-4-2004, IEEE-SA, PISCATAWAY, NJ USA, Bd. msc.upamd, 1. August 2004 (2004-08-01) , Seiten 1-40, XP017637060, [gefunden am 2010-11-18] in der Anmeldung erwähnt
- CENA G ET AL: "New efficient communication services for ISO 11898 networks", COMPUTER STANDARDS AND INTERFACES, ELSEVIER SEQUOIA. LAUSANNE, CH, Bd. 22, Nr. 1, 1. März 2000 (2000-03-01), Seiten 61-74, XP004199341, ISSN: 0920-5489, DOI: 10.1016/S0920-5489(99)00027-6

## Beschreibung

### Stand der Technik

Die vorliegende Erfindung betrifft eine Vorrichtung zur Verwendung in Teilnehmerstationen eines CAN-Bussystems, welche zur Bereitstellung beziehungsweise zur Verarbeitung einer globalen Zeitinformation beim ereignisgesteuerten Austausch von Daten mit anderen Teilnehmerstationen des CAN-Bussystems eingerichtet ist, sowie das mit derartigen Teilnehmerstationen gebildete Bussystem.

### Offenbarung der Erfindung

Beispielsweise aus den internationalen Normen ISO 11898-1, -2 und -3 ist das "Controller Area Network" (CAN) bekannt, welches ein ereignisgesteuertes Verfahren zum Austausch von Daten zwischen Teilnehmern eines Bussystems umfasst. Das verwendete Medienzugriffssteuerverfahren beruht auf der bitweisen Arbitrierung, bei der mehrere Teilnehmerstationen gleichzeitig versuchen können, Daten über den Kanal des Bussystems zu übertragen, ohne dass hierdurch die Datenübertragung gestört wird. Die Teilnehmerstationen können beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal.

Durch die bitweise Arbitrierung wird eine zerstörungsfreie Übertragung des Datenrahmens über den Kanal erreicht. Hierdurch ergeben sich gute Echtzeiteigenschaften des CAN.

Beispielsweise aus der internationalen Norm ISO 11898-4 ist eine als "Time Triggered CAN" (TTCAN) bezeichnete Erweiterung des CAN bekannt. Gemäß der Protokollspezifikation von TTCAN wird in der so genannten System-Matrix eine Zeitfensterstruktur definiert, die mehrere aufeinander folgende Basiszyklen aufweist, welche wiederum aus Zeitfenstern (oftmals auch als "Zeitschlitze" oder "time slots" bezeichnet) bestehen, deren Abfolge sich regelmäßig wiederholt. Hierbei kann jeder Nachricht und somit der sendenden Teilnehmerstation ein bestimmtes Zeitfenster, innerhalb dessen diese Nachricht übertragen werden muss, zugewiesen werden. Es besteht auch die Möglichkeit, in Zeitfenstern den konkurrierenden, durch Arbitirierung koordinierten Zugriff für mehrere Teilnehmerstationen freizugeben. Bei TTCAN wird der Zugriff auf den Kanal also zumindest teilweise durch ein zeitgesteuertes Verfahren koordiniert.

In TTCAN wird zwischen TTCAN Level 1 und TTCAN Level 2 unterschieden. In beiden Fällen erfolgt die Kommunikation in einer Folge von Basiszyklen, die jeweils von einer Referenznachricht eingeleitet werden. Der Unterschied zwischen den beiden Levels ist, dass in Level 2 die Referenznachricht Informationen zur Synchronisierung einer globalen Zeitinformation oder Global Time enthält. TTCAN zeichnet sich also dadurch aus, dass den Teilnehmerstationen eine globale Zeitinformation durch einen Zeitmaster zur Verfügung gestellt werden kann. Ein definiertes Vorgehen zur Synchronisation sorgt dafür, dass alle Teilnehmerstationen eine einheitliche globale Zeitinformationen verwenden.

CAN Controller, die TTCAN Level 2 beherrschen, verfügen über eine Schaltung (Zähler, Rechenwerk, Steuerwerk), die die Global Time in Hardware synchronisiert und kalibriert sowie Zeitmessung und Zeitmeldung ermöglicht.

Das TTCAN-Protokoll enthält auch Überwachungs-Funktionen, die sicherstellen sollen, dass die CAN Kommunikation das vorher definierte feste Zeitraster einhält. Falls Fehler im Zeitraster auftreten, wird die Zeitbasis als ungültig angezeigt. Bei schweren Fehlern kann die CAN Kommunikation eingestellt werden.

In bestimmten Anwendungen ist eine Zeitsteuerung der Buskommunikation entweder nicht möglich, oder zumindest nicht sinnvoll, oder der Aufwand zur Erstellung der Systemmatrix ist ungerechtfertigt hoch. Dennoch ist aber eine Bereitstellung einer globalen Zeitinformationen, wie sie vom TTCAN Level 2 geleistet wird, erwünscht, beispielsweise um in den Algorithmen, die in den Teilnehmerstationen ablaufen, die Zeitinformation verwenden zu können.

Die internationale Patentanmeldung WO 98/54872 A1 offenbart eine Kombination von CAN mit "Time Division Multiple Access" (TDMA) als Medienzugriffsverfahren, wobei eine Referenznachricht ("Sync Pulse") zur Synchronisierung der Teilnehmer übermittelt wird.

Die Veröffentlichung CENA G ET AL: "New efficient communication services for ISO 11898 networks", COMPUTER STANDARDS AND INTERFACES, ELSEVIER SEQUOIA. LAUSANNE, CH, Bd. 22, Nr. 1, 1. März 2000 (2000-03-01), Seiten 61-74; ISSN: 0920-5489, DOI: 10.1016/S0920-5489(99)00027-6 offenbart ein "CAN/P" Netzwerk, ausgehend von CAN ISO 11898, mit einem Scheduler und einer (festen) Anzahl Datenzeitschlitzen. Synchronisation erfolgt durch einen pre-emption Mechanismus.

Die aus dem Stand der Technik bekannten Verfahren liefern nicht in jeder Hinsicht befriedigende Ergebnisse.

### Offenbarung der Erfindung

Aufgabe der Erfindung ist die Bereitstellung einer modifizierten Kommunikationsvorrichtung zum Einsatz in Teilnehmerstationen eines CAN-Bussystems, welche die Vorteile der Bereitstellung einer globalen Zeitinformationen aus dem TTCAN Level 2 beibehält und gleichzeitig die nach heutigem Stand der Technik bei TTCAN erforderliche Zeitsteuerung beziehungsweise Aufstellung einer vollständigen Systemmatrix nicht zwingend erforderlich macht.

Es wird hierzu eine Weiterentwicklung eines TTCAN-Controllers beschrieben, die sich dadurch auszeichnet, das die aus dem TTCAN-Controller bekannte Hardware zur Darstellung der Global Time für TTCAN Level 2 in der erfindungsgemäßen Vorrichtung auch in normaler, ereignisgesteuerter CAN-Kommunikation nutzen lässt. Die Aufgabe wird durch diese Vorrichtung mit den Merkmalen des unabhängigen Anspruchs eins gelöst.

### Vorteile der Erfindung

Die beschriebene Aufgabe wird erfindungsgemäß dadurch gelöst, dass der TTCAN-Controller in einen besonderen Betriebszustand gesetzt wird, in dem die CAN Kommunikation in der üblichen, ereignisgesteuerten Weise erfolgt, während die Hardware für die Darstellung der Global Time aber arbeitet wie in TTCAN Level 2.

Dies hat den Vorteil, dass allen Knoten im CAN-Netzwerk eine automatisch synchronisierte und kalibrierte Zeitbasis zur Verfügung gestellt wird. Es gibt hierbei keinen Rechenaufwand in der Software, was besonders vorteilhaft ist.

Im Unterschied zum TTCAN Protokoll Level 2 nach ISO 11898-4 ist es jedoch nicht notwendig, dass die CAN-Kommunikation zeitgesteuert erfolgt. Der damit verbundene Aufwand zur Erstellung der vollständigen Systemmatrix ist also nicht erforderlich. Das Verfahren kann auch angewendet werden, wenn aufgrund physikalischer, techischer oder anderer Randbedingunen eine zeitgesteuerte Kommunikation nicht aufgebaut werden soll.

Weiterhin vorteilhaft ist, dass in einem TTCAN-Controller, der bereits TTCAN Level 2 beherrscht, der Zusatz-Aufwand beispielsweise für die Entwicklung, das Design und die Verfügbarmachung des erfindungsgemäßen Verfahrens gering ist.

### Zeichnungen

Die Erfindung wird im weiteren anhand der Zeichnungen vorgestellt und näher erläutert.
Figur 1 zeigt ein Bussystem 100 mit mehreren Busteilnehmern 101 bis 105. Jeder Teilnehmer 101 bis 105 besitzt eine eigene Zeitbasis 106 bis 110.
Figur 2 zeigt den Teil des Zustandsdiagramms der erfindungsgemäßen Vorrichtungen, welcher das Synchronisierungsverfahren beschreibt.
Figur 3 zeigt den Teil des Zustandsdiagramms der erfindungsgemäßen Vorrichtungen, welcher das Master-Slave-Verhalten beschreibt.

### Beschreibung der Ausführungsbeispiele

Im Weiteren werden Ausführungsbeispiele für das erfindungsgemäßes Verfahren und die Vorrichtung beschrieben. Diese konkreten Beispiele werden zur Erläuterung der Ausführung eingesetzt, beschränken aber nicht den Umfang des Erfindungsgedankens.

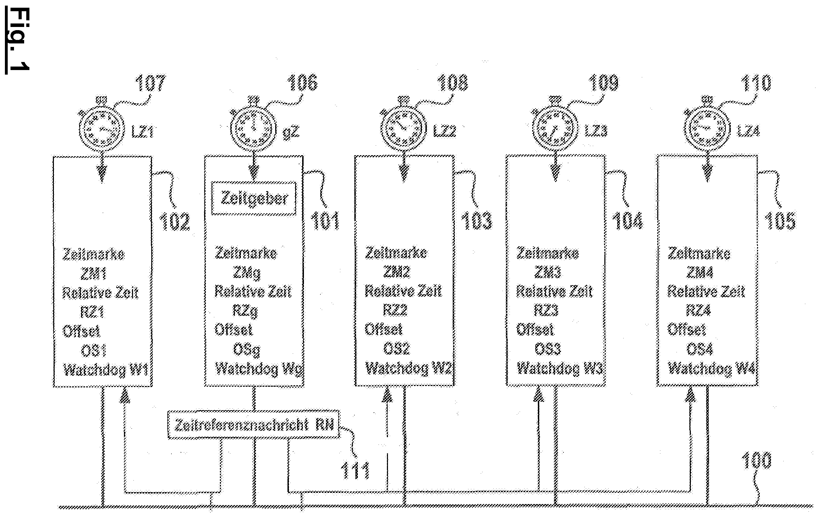

Figur 1 zeigt ein Bussystem 100 mit mehreren Busteilnehmern 101 bis 105. Jeder Teilnehmer 101 bis 105 besitzt dabei eine eigene Zeitbasis 106 bis 110, die einerseits durch ein internes Mittel, wie eine Uhr, Zähler, Taktgenerator, etc. oder extern zu dem jeweiligen Teilnehmer übertragen werden kann. Die jeweilige lokale Zeitbasis IZ1 bis IZ4 ist insbesondere ein Zähler, z.B. 16-bit aufwärtszählend, der lediglich durch einen HW-Reset beeinflußt werden darf. Die lokale Zeitbasis ist hier in jedem Knoten bzw. Teilnehmer 102 bis 105 implementiert. Ein Teilnehmer, der Zeitgeber, 101 besitzt dabei ein exponierte Stellung. Seine Zeitbasis wird als globale Zeitbasis 106 mit der globalen Zeit gZ bezeichnet und ist entweder in dem Zeitgeber 101 implementiert oder wird extern an diesen übertragen. Die globale Zeit gZ wird prinzipiell in jedem Knoten aus der lokalen Zeitbasis 107 bis 110 bzw. der lokalen Zeit IZ (IZ1 bis IZ4) und einem Offset OS1 bis OS4 gebildet. Dieser Offset Osg beim Zeitgeber 101 ist in der Regel gleich Null (Osg = 0). Alle anderen Knoten bilden ihre Sicht auf die globale Zeit gZ aus der lokalen Zeit IZ (IZ1 bis IZ4) und dem lokalen Offset OS1 bis OS4 und OSg wenn OSg ungleich 0. Der Fall, dass OSg nicht Null ist, tritt z.B. auf wenn die globale Zeit gZ von aussen an den Zeitgeber 101 übertragen wird, und dieser zusätzlich eine eigene Zeitbasis 106 enthält. Dann wird auch der Zeitgeber auf die globale Zeit gZ geeicht und gZ und die Zeitbasis 106 stimmen eventuell nicht überein. Der lokale Offset ist die Differenz zwischen der lokalen Zeit zum Sendezeitpunkt (SOF, Start Of Frame) der Referenznachricht und der vom Zeitgeber in dieser Referenznachricht übertragenen Globalen Zeit.

Insoweit entspricht das Verfahren dem üblichen Verfahren zur Bereitstellung einer globalen Zeitinformation im TTCAN.

Die folgenden Abweichungen gegenüber der TTCAN-Spezifikation werden nun neu eingeführt, um die beschriebene Aufgabe zu lösen und die angestrebten Vorteile gegenüber dem Stand der Technik zu erzielen:
Die CAN-Messages werden nicht automatisch, zeitgesteuert, versendet, sondern nur dann, wenn dies von der Software im Host-Controller angefordert wird. Dies gilt auch für die Referenznachricht. Es kann beispielsweise ein zeitgesteuerter Interrupt verwendet werden, um den Host-Controller zu der Anforderung zu veranlassen. Die Anforderung kann abhängig von bestimmten Ereignissen wie beispielsweise dem Vorliegen eines bestimmten Resultates einer Berechnung innerhalb der Software erfolgen. Auch der Empfang einer bestimmten vordefinierten Nachricht oder eines Remote-Frames kann die Anforderung auslösen. Die Form der versendeten Referenznachricht folgt der Definition in der Norm ISO 11898-4, Kapitel 5.3.3.

Die Empfänger einer Referenznachricht werten diese so aus, wie es gemäß der angegebenen Norm für TTCAN Level 2 vorgesehen ist. Das heißt, die in der Referenznachricht enthaltene "Master_Ref_Mark" ist die Grundlage der systemweiten globalen Zeit. Die Fehlerbehandlung erfolgt, wie weiter unten im Zusammenhang mit dem Verhalten des "error level" innerhalb des Master-State ausgeführt wird, abweichend von der TTCAN-Norm.

Der Master-State einer Teilnehmerstation wird in TTCAN gemäß Norm durch einen 6-Bit-Vektor beschrieben, der sich aus drei Unter-Vektoren "error level", "sync_mode" und "master-slave_mode" mit jeweils 2 Bit zusammensetzt. Im folgenden werden die möglichen Zustände und Zustandsübergänge in erfindungsgemäßen Teilnehmerstationen beschrieben, wobei die Größe des Master-State-Vektors auch einen anderen Wert, beispielsweise 5 Bit mit nur einem Bit für "error level" einnehmen könnte.

### 1) Sync_Mode:

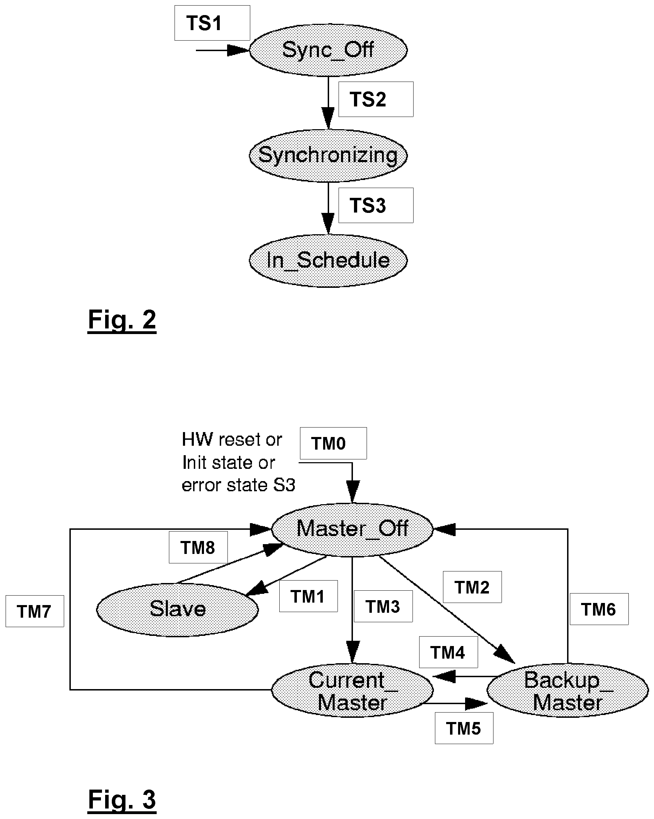

In Figur 2 wird das erfindungsgemäße Synchronisierungs-Steuerwerk beschrieben, das die Zustände und Zustandsübergänge des Unter-Vektors "sync_mode" behandelt. Es wird gegenüber dem Stand der Technik nach ISO 11898-4 der Zustand "In_Gap" ausgeschlossen. Ein eventuelles "Next_is_Gap"-Bit in der Referenznachricht, durch welches normalerweise der Zeitgeber signalisiert, dass er den Start des nächsten Basiszyklus im TTCAN-Zeitschema auf ein spezifisches Event synchronisieren wird und es daher zu einer Abweichung vom strikt periodischen Ablauf der Kommunikation kommen kann, wird von den erfindungsgemäßen Teilnehmerstationen ignoriert, da es ohnehin keinen strikt periodischen Ablauf gibt. Alternativ kann auch festgelegt werden, dass das "Next_is_Gap"-Bit immer mit einem festgelegten Wert, beispielsweise 0, gesendet wird, und dies kann beim Empfang der Referenznachricht überprüft werden. In jedem Fall vereinfacht sich das in ISO 11898-4, Kapitel 9.4.2 beschriebene Steuerwerk zu der in der Figur 2 beschriebenen Variante.

Bei Systemstart, nach einem Zurücksetzen der Hardware oder im Fehlerzustand S3 nimmt "sync_mode" den Wert "Sync_Off" ein. Dieser mit TS0 gekennzeichnete Übergang hat immer Vorrang. Nach Abschluss der Initialisierung und Rücksetzen der lokalen Zeitbasis findet der Übergang TS1 in den Modus "Synchronizing" statt. In diesem Zustand senden analog ISO 11898-4, Kapitel 8.2 alle potenziellen Zeitgeber eine Referenznachricht und ermitteln auf diese Weise den aktuell aktiven Zeitgeber. Dieser sendet eine weitere Referenznachricht und nach Empfang der weiteren Referenznachricht - ggf. mit Überprüfung des korrekten Wertes des "Next_is_Gap"-Bit und / oder des "Disc_Bit" - wechseln die Teilnehmerstationen per Übergang TS2 in den Zustand "In_Schedule".

### 2) Error Level:

Der Unter-Vektor "error level" innerhalb des Master-State kann im TTCAN gemäß der Norm vier verschiedene Fehlerzustände einnehmen, die mit S0 bis S3 bezeichnet werden und in ISO 11909-4, Kapitel 9.1 beschrieben sind. Alle Fehler-Bedingungen die einen Wechsel in die Zustände S1 oder S2 bewirken, beziehen sich hierbei auf Fehler im TTCAN Zeitraster.

In erfindungsgemäßen Teilnehmerstationen fallen diese Fehler-Bedingungen weg, da kein Zeitraster für die Buskommunikation vorgesehen ist. Aus diesem Grund werden in erfindungsgemäßen Teilnehmerstationen nur noch die beiden in der ISO 11898-4 spezifizierten Fehler-Bedingungen "CAN_Bus_Off" und "Watch_Trigger_Reached" verwendet, welche beide zu einem Übergang in den Fehlerzustand S3 führen. Liegt keine der Fehlerbedingungen an, ist die Teilnehmerstation im Fehlerzustand S0. Da die Teilnehmerstation nur zwei Fehlerzustände einnehmen kann, genügt für die Abbildung des "error level" ein einzige Bit. Es kann aber auch wie im TTCAN gemäß Norm ein 2-Bit-Vektor verwendet werden. Als Zeitmarke für den "Watch_Trigger" kann eine Konstante, zum Beispiel 0xFF00 NTU verwendet werden.

In erfindungsgemäßen Teilnehmerstationen gibt es, wie beschrieben, nur die beiden Fehlerzustände S0 und S3. In S3 wird die Zeitbasis als ungültig angezeigt, das Synchronisierungs-Steuerwerk und das Master-Slave-Steuerwerk werden zurückgesetzt. Anders als im Stand der Technik für TTCAN gemäß ISO 11898-4 vorgesehen, wird im Fehlerzustand S3 die CAN-Kommunikation nicht angehalten, sondern die nächste gültige Referenznachricht bewirkt, dass von S3 in S0 zurückgeschaltet wird.

### 3) Master-Slave_Mode:

In Figur 3 wird das erfindungsgemäße Master-Slave-Steuerwerk beschrieben, das die Zustände und Zustandsübergänge des Unter-Vektors "master-slave_mode" behandelt. Es funktioniert in erfindungsgemäßen Teilnehmerstationen weitgehend wie in ISO 11898-4, Kapitel 9.4.3. Es fallen jedoch die Zustandswechsel weg, die durch den Fehlerzustand S2 bewirkt werden.

Bei Systemstart, nach einem Zurücksetzen der Hardware oder im Fehlerzustand S3 nimmt "master-slave_mode" den Wert "Master_Off" ein. Auch hier hat dieser mit TM0 gekennzeichnete Übergang immer Vorrang. Zur besseren Lesbarkeit sind die Übergänge TM6, TM7 und TM8, die aufgrund des Fehlerzustands S3 von den anderen Zuständen in den "Master_Off"-Zustand führen, explizit eingezeichnet. Aus dem "Master_Off"-Zustand führen die drei Übergänge TM1, TM2 und TM3 in die weiteren Zustände, sobald auf dem Bus eine Referenznachricht gelesen wird. Ist die betreffende Teilnehmerstation kein potenzieller Zeitgeber, geht sie via TM1 in den Zustand "Slave". Ist sie potenzieller Zeitgeber und liest eine Referenznachricht, die nicht die Adresse respektive Priorität der eigenen Referenznachricht aufweist, hat sich ein anderer potenzieller Zeitgeber durchgesetzt und sie geht via TM2 in den Zustand "Backup_Master". Ist sie potenzieller Zeitgeber und liest die (von ihr selbst gesendete) Referenznachricht mit der eigenen Adresse respektive Priorität, geht sie via TM3 in den Zustand "Current_Master". Wechsel zwischen "Backup_Master" und "Current_Master" finden via TM4 und TM5 jeweils bei Lesen einer Referenznachricht höherer Priorität (TM5) bzw. gleicher Priorität (TM4) statt.

Vorteilhafterweise wird die erfindungsgemäße Vorrichtung so ausgeprägt, dass sie konfigurierbar beziehungsweise umschaltbar ist zwischen dem erfindungsgemäßen Verhalten und einem TTCAN-Verhalten gemäß Norm ISO 11898-4. Die Vorrichtung weist hierfür einen Speicherbereich oder ein Konfigurationsregister auf, in welchem der gewünschte Modus des Medienzugriffsteuerverfahrens ausgewählt werden kann. Das heißt, die Vorrichtung ist nach Belieben umschaltbar zwischen einem TTCAN-Betrieb nach Stand der Technik und dem erfindungsgemäßen, ereignisgesteuerten Betrieb mit globaler Zeitinformation. Bei Umschaltung in den erfindungsgemäßen Modus können die für den TTCAN-Betrieb vorgesehenen Steuerwerke und Hardware-Vorrichtungen weiter benutzt werden, jedoch werden dann nicht alle möglichen Werte angenommen.

Insgesamt liegt durch die dargestellte Erfindung mit den geschilderten Ausführungsbeispielen eine Lösung für die technische Aufgabe vor, ein gegenüber dem Stand der Technik vorteilhaftes, modifiziertes Kommunikationsverfahrens für CAN-Bussysteme bereitzustellen, welches die Vorteile einer globalen Zeit aus dem TTCAN beibehält und die nach Stand der Technik bei TTCAN erforderliche Zeitsteuerung nicht zwingend erfordert.

## Patentansprüche

1. Vorrichtung zum Austausch von Daten in Nachrichten zwischen Teilnehmern (101-105) eines Bussystems (100),
wobei bei gleichzeitigen Sendeversuchen mehrerer Teilnehmer durch bitweise Arbitrierung gemäß ISO 11898-1 eine zerstörungsfreie Übertragung einer Nachricht über das Bussystem erreicht wird,
wobei die Teilnehmer (101-105) eigene Zeitbasen (106-110) aufweisen, wobei ein erster Teilnehmer (101) in einer Funktion als Zeitgeber eine Referenznachricht (RN) mit einer vorgebbaren Kennung über den Bus (100) überträgt,
**dadurch gekennzeichnet, dass** die Referenznachricht (RN) ohne festes Zeitraster nur dann gesendet wird, wenn dies von einer Software im Host-Controller angefordert wird,
wobei die Referenznachricht eine erste Zeitinformation bezüglich der Zeitbasis (106) des ersten Teilnehmers enthält, wobei wenigstens ein zweiter Teilnehmer (102-105) mittels seiner Zeitbasis (107-110) eine eigene zweite Zeitinformation (IZ1- IZ4) abhängig von der ersten Zeitinformation des ersten Teilnehmers derart bildet, dass aus der Abweichung (OS1- OS4) der ersten und der zweiten Zeitinformation ein Korrekturwert ermittelt wird, so dass sich aus der ersten Zeitinformation des ersten Teilnehmers als Zeitgeber die globale Zeit (gZ) für das Bussystem ergibt.

2. Vorrichtung gemäß Anspruch 1,
**dadurch gekennzeichnet, dass**
durch Eintragen eines vorgegebenen Wertes in einen zur Konfiguration des Medienzugriffssteuerverfahrens in der Vorrichtung vorgesehenen Speicherbereich oder Register der Austausch der Nachrichten zwischen den Teilnehmern des CAN-Bussystems auf zeitgesteuerten Betrieb gemäß dem aus der TTCAN-Erweiterung ISO 11898-4 der CAN-Norm bekannten Verfahren umgeschalten werden kann.

3. Vorrichtung gemäß Anspruch 1 oder 2, -
**dadurch gekennzeichnet, dass**
zur Ermittlung und gegebenenfalls Bereitstellung der globalen Zeitinformation in der Vorrichtung eine Schaltung mit Zähler, Rechenwerk und Steuerwerk in Hardware vorgesehen ist.

4. Vorrichtung gemäß Anspruch 2, **dadurch gekennzeichnet, dass**
abhängig von dem durch Beschreiben des Speicherbereichs oder Registers ausgewählten Medienzugriffssteuerverfahren modifizierte Übergangsbedingungen zwischen den Zuständen des Steuerwerkes angewendet werden,
wobei Zustandsübergänge, die sich auf Fehler im Zeitraster beziehen, wegfallen.

5. Vorrichtung gemäß einem der vorangegangenen Ansprüche,
**dadurch gekennzeichnet, dass**
in der Vorrichtung ein Register dafür vorgesehen ist, der Vorrichtung die Möglichkeit zur Übernahme der Funktion des Zeitgebers zuzuweisen.

6. Vorrichtung gemäß Anspruch 5,
**dadurch gekennzeichnet, dass**
bei Zuweisung der Möglichkeit zur Übernahme der Funktion des Zeitgebers die Vorrichtung nach Neustart oder Zurücksetzen einen Sendeversuch für eine Referenznachricht ausführt.

7. Vorrichtung gemäß einem der vorangegangenen Ansprüche,
**dadurch gekennzeichnet, dass**
bei Ausbleiben des Empfanges einer Referenznachricht für eine vorgegebene oder vorgebbare Zeit die Vorrichtung einen Neustart durchführt.

8. Vorrichtung gemäß einem der vorangegangenen Ansprüche,
**dadurch gekennzeichnet, dass**
die Vorrichtung, wenn sie nicht die Funktion des Zeitgebers ausübt, ihre Zeitbasis abhängig von dem ermittelten Korrekturwert anpasst.

9. Verfahren zum Austausch von Daten in Nachrichten zwischen Teilnehmern (101-105) eines CAN-Bussystems (100),
wobei bei gleichzeitigen Sendeversuchen mehrerer Teilnehmer durch bitweise Arbitrierung gemäß ISO 11898-1 eine zerstörungsfreie Übertragung einer Nachricht über das Bussystem erreicht wird,
wobei die Teilnehmer (101-105) eigene Zeitbasen (106-110) aufweisen, wobei ein erster Teilnehmer (101) in einer Funktion als Zeitgeber eine Referenznachricht (RN) mit einer vorgebbaren Kennung über den Bus (100) überträgt,
**dadurch gekennzeichnet, dass** die Referenznachricht (RN) ohne festes Zeitraster nur dann gesendet wird, wenn dies von der Software im Host-Controller (S. 6 oben) angefordert wird,
wobei die Referenznachricht eine erste Zeitinformation bezüglich der Zeitbasis (106) des ersten Teilnehmers enthält,
wobei wenigstens ein zweiter Teilnehmer (102-105) mittels seiner Zeitbasis (107-110) eine eigene zweite Zeitinformation (IZ1- IZ4) abhängig von der ersten Zeitinformation des ersten Teilnehmers derart bildet, dass aus der Abweichung (OS1- OS4) der ersten und der zweiten Zeitinformation ein Korrekturwert ermittelt wird, so dass sich aus der ersten Zeitinformation des ersten Teilnehmers als Zeitgeber die globale Zeit (gZ) für das Bussystem ergibt.

10. Verfahren gemäß Anspruch 9,
**dadurch gekennzeichnet, dass**
durch Eintragen eines vorgegebenen Wertes in einen zur Konfiguration des Medienzugriffssteuerverfahrens vorgesehenen Speicherbereich oder ein Register der Austausch der Nachrichten zwischen den Teilnehmern des CAN-Bussystems auf zeitgesteuerten Betrieb gemäß dem aus der TTCAN-Erweiterung ISO 11898-4 der CAN-Norm bekannten Verfahren umgeschalten werden kann.

11. Verfahren gemäß Anspruch 10,
**dadurch gekennzeichnet, dass**
abhängig von dem durch Beschreiben des Speicherbereichs oder Registers ausgewählten Medienzugriffssteuerverfahren modifizierte Übergangsbedingungen zwischen den Zuständen des Steuerwerkes angewendet werden,
wobei Zustandsübergänge, die sich auf Fehler im Zeitraster beziehen, wegfallen.

12. Verfahren gemäß Anspruch 9 bis 11,
**dadurch gekennzeichnet, dass**
mehreren Busteilnehmern die Möglichkeit zur Übernahme der Funktion des Zeitgebers durch geeignete Konfiguration zugewiesen werden kann.

13. Verfahren gemäß Anspruch 12,
**dadurch gekennzeichnet, dass**
Busteilnehmer, denen die Möglichkeit zur Übernahme der Funktion des Zeitgebers zugewiesen wurde, nach Neustart oder Zurücksetzen einen Sendeversuch für eine Referenznachricht ausführen.

14. Verfahren gemäß einem der vorangegangenen Ansprüche,
**dadurch gekennzeichnet, dass**
bei Ausbleiben einer Referenznachricht für eine vorgegebene oder vorgebbare Zeit die Busteilnehmer einen Neustart durchführen.

15. Verfahren gemäß einem der vorangegangenen Ansprüche,
**dadurch gekennzeichnet, dass**
die Busteilnehmer, die nicht die Funktion des Zeitgebers ausüben, ihre eigene Zeitbasis abhängig von dem jeweils ermittelten Korrekturwert anpassen.

## Claims

1. Apparatus for interchanging data in messages between subscribers (101-105) of a bus system (100),
wherein simultaneous transmission attempts by multiple subscribers result in bit-by-bit arbitration according to ISO 11898-1 achieving nondestructive transmission of a message via the bus system,
wherein the subscribers (101-105) have separate time bases (106-110),
wherein a first subscriber (101), in a function as a timer, transmits a reference message (RN) with a prescribable identifier via the bus (100), **characterized in that** the reference message (RN) is sent without a fixed time reference only if this is requested by a piece of software in the host controller,
wherein the reference message contains first time information in respect of the time base (106) of the first subscriber, wherein at least one second subscriber (102-105) uses its time base (107-110) to form second time information of its own (IZ1-IZ4) on the basis of the first time information of the first subscriber such that the difference (OS1-OS4) between the first and second time information is used to ascertain a correction value, so that the first time information of the first subscriber, as a timer, results in the global time (gZ) for the bus system.

2. Apparatus according to Claim 1,
**characterized in that**
entering a prescribed value into a memory area or register intended for configuring the media access control method in the apparatus allows the interchange of the messages between the subscribers of the CAN bus system to be switched to -time-controlled mode according to the method known from the TTCAN extension ISO 11898-4 of the CAN standard.

3. Apparatus according to Claim 1 or 2,
**characterized in that**
for the purpose of ascertaining and if need be providing the global time information, the apparatus has provision in it for a circuit having a counter, arithmetic and logic unit and control unit in hardware.

4. Apparatus according to Claim 2,
**characterized in that**
the media access control method selected by writing to the memory area or register is taken as a basis for applying modified transition conditions between the states of the control unit, wherein state transitions relating to errors in the time reference cease to apply.

5. Apparatus according to one of the preceding claims,
**characterized in that**
the apparatus has provision in it for a register for assigning to the apparatus the opportunity to perform the function of the timer.

6. Apparatus according to Claim 5,
**characterized in that**
assignment of the opportunity to perform the function of the timer results in the apparatus, after restarting or resetting, making a transmission attempt for a reference message.

7. Apparatus according to one of the preceding claims,
**characterized in that**
absence of reception of a reference message for a prescribed or prescribable time results in the apparatus performing a restart.

8. Apparatus according to one of the preceding claims,
**characterized in that**
the apparatus, if not performing the function of the timer, adapts its time base on the basis of the ascertained correction value.

9. Method for interchanging data in messages between subscribers (101-105) of a CAN bus system (100),
wherein simultaneous transmission attempts by multiple subscribers result in bit-by-bit arbitration according to ISO 11898-1 achieving nondestructive transmission of a message via the bus system,
wherein the subscribers (101-105) have separate time bases (106-110),
wherein a first subscriber (101), in a function as a timer, transmits a reference message (RN) with a prescribable identifier via the bus (100), **characterized in that** the reference message (RN) is sent without a fixed time reference only if this is requested by a piece of software in the host controller (top of page 6),
wherein the reference message contains first time information in respect of the time base (106) of the first subscriber, wherein at least one second subscriber (102-105) uses its time base (107-110) to form second time information of its own (IZ1-IZ4) on the basis of the first time information of the first subscriber such that the difference (OS1-OS4) between the first and second time information is used to ascertain a correction value, so that the first time information of the first subscriber, as a timer, results in the global time (gZ) for the bus system.

10. Method according to Claim 9,
**characterized in that**
entering a prescribed value into a memory area or register intended for configuring the media access control method allows the interchange of the messages between the subscribers of the CAN bus system to be switched to time-controlled mode according to the method known from the TTCAN extension ISO 11898-4 of the CAN standard.

11. Method according to Claim 10,
**characterized in that**
the media access control method selected by writing to the memory area or register is taken as a basis for applying modified transition conditions between the states of the control unit, wherein state transitions relating to errors in the time reference cease to apply.

12. Method according to Claims 9 to 11,
**characterized in that**
multiple bus subscribers can be assigned the opportunity to perform the function of the timer by means of suitable configuration.

13. Method according to Claim 12,
**characterized in that**
bus subscribers that have been assigned the opportunity to perform the function of the timer make a transmission attempt for a reference message after restarting or resetting.

14. Method according to one of the preceding claims,
**characterized in that**
absence of a reference message for a prescribed or prescribable time results in the bus subscribers performing a restart.

15. Method according to one of the preceding claims,
**characterized in that**
the bus subscribers not performing the function of the timer adapt their own time base on the basis of the respectively ascertained correction value.

## Revendications

1. Dispositif d'échange de données dans des messages entre abonnés (101-105) d'un système de bus (100),
dans lequel une transmission exempte de perturbation d'un message est réalisée par l'intermédiaire du système de bus lors de tentatives de transmission simultanées d'une pluralité d'abonnés par arbitrage bit par bit conformément à la norme ISO 11898-1,
dans lequel les abonnés (101-105) possèdent leurs propres bases de temps (106-110),
dans lequel un premier abonné (101), conformément à une fonction de temporisateur, transmet par l'intermédiaire du bus (100) un message de référence (RN) ayant un identificateur prédéfinissable,
**caractérisé en ce que** le message de référence (RN) n'est transmis sans trame temporelle fixe que si le logiciel du contrôleur hôte le demande,
dans lequel le message de référence comprend une première information de temps par rapport à la base de temps (106) du premier abonné, dans lequel au moins un deuxième abonné (102-105) utilise sa base de temps (107-110) pour créer une deuxième information de temps propre (IZ1- IZ4) en fonction de la première information de temps du premier abonné de manière à ce qu'une valeur de correction soit déterminée à partir de l'écart (OS1-OS4) entre les première et deuxième informations de temps, de telle sorte que le temps global (gZ) du système de bus résulte de la première information de temps du premier abonné en tant que temporisateur.

2. Dispositif selon la revendication 1,
**caractérisé en ce que** l'échange des messages entre les abonnés du système de bus CAN peut être amené à basculer sur un fonctionnement commandé en fonction du temps conformément au procédé connu ISO 11898-4, extension TTCAN, de la norme CAN, en introduisant une valeur prédéterminée dans une zone de mémoire ou un registre prévu dans le dispositif pour configurer le procédé de commande d'accès au support.

3. Dispositif selon la revendication 1 ou 2,
**caractérisé en ce qu'**il est prévu dans le dispositif un circuit comportant un compteur, une unité arithmétique et une unité de commande sous forme matérielle pour déterminer et éventuellement fournir l'information de temps globale.

4. Dispositif selon la revendication 2,
**caractérisé en ce que** des conditions de transition modifiées entre les états du mécanisme de commande sont appliquées en fonction du procédé de commande d'accès au support choisi en décrivant la zone de stockage ou le registre,
dans lequel les transitions d'état relatives à des erreurs de la trame temporelle ne sont pas prises en compte.

5. Dispositif selon l'une des revendications précédentes,
**caractérisé en ce qu'**il est prévu dans le dispositif un registre destiné à assigner au dispositif la possibilité de prendre en charge la fonction de temporisateur.

6. Dispositif selon la revendication 5,
**caractérisé en ce que**, lors de l'assignation de la possibilité de prendre en charge la fonction de temporisateur, le dispositif exécute une tentative de transmission pour un message de référence après redémarrage ou réinitialisation.

7. Dispositif selon l'une des revendications précédentes,
**caractérisé en ce qu'**en l'absence de réception d'un message de référence pendant une durée prédéterminée ou prédéfinissable, le dispositif exécute un redémarrage.

8. Dispositif selon l'une des revendications précédentes,
**caractérisé en ce que** le dispositif, lorsqu'il n'exécute pas la fonction de temporisateur, ajuste sa base de temps en fonction de la valeur de correction déterminée.

9. Procédé d'échange de données dans des messages entre abonnés (101-105) d'un système de bus CAN (100), dans lequel une transmission exempte de perturbation d'un message par l'intermédiaire du système de bus est réalisée lors de tentatives de transmission simultanées d'une pluralité d'abonnés par arbitrage bit par bit conformément à la norme ISO 11898-1,
dans lequel les abonnés (101-105) possèdent leurs propres bases de temps (106-110),
dans lequel un premier abonné (101), conformément à une fonction de temporisateur, transmet par l'intermédiaire du bus (100) un message de référence (RN) ayant un identificateur prédéfinissable,
**caractérisé en ce que** le message de référence (RN) n'est transmis sans trame temporelle fixe que si le logiciel du contrôleur hôte le demande (p. 6 ci-dessus),
dans lequel le message de référence comprend une première information de temps par rapport à la base de temps (106) du premier abonné,
dans lequel au moins un deuxième abonné (102-105) utilise sa base de temps (107-110) pour créer une deuxième information de temps propre (IZ1-IZ4) en fonction de la première information de temps du premier abonné de manière à ce qu'une valeur de correction soit déterminée à partir de l'écart (OS1-OS4) entre les première et deuxième informations de temps, de telle sorte que le temps global (gZ) du système de bus résulte de la première information de temps du premier abonné en tant que temporisateur.

10. Procédé selon la revendication 9,
**caractérisé en ce que** l'échange de messages entre les abonnés du système de bus CAN peut être amené à basculer sur un fonctionnement commandé en fonction du temps conformément au procédé connu ISO 11898-4, extension TTCAN, de la norme CAN, en introduisant une valeur prédéterminée dans une zone de mémoire ou un registre prévu pour configurer le procédé de commande d'accès au support.

11. Procédé selon la revendication 10,
**caractérisé en ce que** des conditions de transition modifiées entre les états du mécanisme de commande sont appliquées en fonction du procédé de commande d'accès au support choisi en décrivant la zone de stockage ou le registre,
dans lequel les transitions d'état relatives à des erreurs de la trame temporelle ne sont pas prises en compte.

12. Procédé selon les revendications 9 à 11,
**caractérisé en ce qu'**une pluralité d'abonnés au bus peuvent se voir assigner la possibilité de prendre en charge la fonction de temporisateur au moyen d'une configuration appropriée.

13. Procédé selon la revendication 12,
**caractérisé en ce que** des postes d'abonnés au bus auxquels a été assignée la possibilité de prendre en charge la fonction de temporisateur exécutent une tentative de transmission pour un message de référence après redémarrage ou réinitialisation.

14. Procédé selon l'une des revendications précédentes,
**caractérisé en ce que**, en l'absence d'un message de référence pendant une durée prédéterminée ou prédéfinissable, les abonnés au bus exécutent un redémarrage.

15. Procédé selon l'une des revendications précédentes,
**caractérisé en ce que** les postes d'abonnés au bus qui n'exercent pas la fonction de temporisateur ajustent leur propre base de temps en fonction de la valeur de correction respectivement déterminée.
